# EUROPÄISCHE PATENTSCHRIFT

(11) **EP 3 028 985 B1**
(45) Veröffentlichungstag und Bekanntmachung des Hinweises auf die Patenterteilung: **20.06.2018**
(21) Anmeldenummer: 15196493.9
(22) Anmeldetag: 26.11.2015
(51) Int. Cl.: B66F 7/22, B25H 1/00, B66F 7/28, B66C 1/42, B66C 1/10, B62D 65/02

(54) **HEBEVORRICHTUNG FÜR EINE BAUGRUPPE EINES KRAFTFAHRZEUGS**
LIFTING DEVICE FOR A COMPONENT OF A MOTOR VEHICLE
DISPOSITIF DE LEVAGE POUR UN MODULE D'UN VÉHICULE AUTOMOBILE

(30) Priorität: 02.12.2014 DE 102014117703
(43) Veröffentlichungstag der Anmeldung: 08.06.2016
(73) Patentinhaber: TKR Spezialwerkzeuge GmbH, 58285 Gevelsberg (DE)
(72) Erfinder: Kreischer, Torsten, 58300 Wetter (DE)
(74) Vertreter: Kalkoff & Partner

(56) Entgegenhaltungen:
- WO-A1-2011/095283
- US-A- 4 599 034
- US-A- 5 513 829
- US-B1- 8 226 140
- US-B1- 8 235 334
- US-B2- 7 296 787

## Beschreibung

Die Erfindung betrifft eine Hebevorrichtung für eine Baugruppe eines Kraftfahrzeugs, mit
- einer Lastaufnahmeeinheit mit mindestens einem Tragarm sowie
- einer an dem Tragarm angeordneten Kopplungseinheit zur lösbaren Verbindung des Tragarms mit der Baugruppe eines Kraftfahrzeugs.

Hebevorrichtungen der eingangs genannten Art werden insbesondere in Fahrzeugwerkstätten eingesetzt, um Kraftfahrzeugbaugruppen, bspw. Kraftfahrzeuggetriebe oder Antriebsaggregate, wie Kraftfahrzeugmotoren zu demontieren. Die Hebevorrichtungen können dabei zur Verbindung mit in Fahrzeugwerkstätten vorhandenen, vorzugsweise fahrbaren Hubeinheiten eine an diesen Hubeinheiten anordbare Stützeinheit aufweisen, so dass die Hebevorrichtung, bspw. nach dem Anheben des Fahrzeugs über eine Hebebühne, unterhalb der Kraftfahrzeugbaugruppe positioniert werden kann. Vor der Demontage der Kraftfahrzeugbaugruppe muss die Hebevorrichtung an dieser Baugruppe, bspw. einem Getriebe, ausgerichtet werden, so dass die Lastaufnahmeeinheit der Hebevorrichtung über die an einem Tragarm ausgerichtete Kopplungseinheit an hierfür vorgesehenen Lagerpunkten der zu demontierenden Kraftfahrzeugbaugruppe anliegt. Anschließend kann dann die Kraftfahrzeugbaugruppe, bspw. das Getriebe vom Fahrzeug getrennt und über die laustaufnehmende Hebevorrichtung komfortabel vom Fahrzeug entfernt werden.

Bekannte Hebevorrichtungen der eingangs genannten Art weisen den Nachteil auf, dass diese keine oder eine nur geringe Anpassbarkeit an unterschiedliche Kraftfahrzeugbaugruppen ermöglichen und daher nur für eine begrenzte Anzahl unterschiedlicher Kraftfahrzeugbaugruppen verwendbar sind. Bereits eine nur zur Demontage von Getrieben vorgesehene Hebevorrichtung besitzt eine nur geringe Anpassbarkeit, so dass letztlich selbst in Vertragswerkstätten, die auf nur einen Fahrzeughersteller ausgerichtet sind, eine Vielzahl von Hebevorrichtungen vorgehalten werden müssen, um eine Demontage der unterschiedlichen Baugruppen unterschiedlicher Fahrzeugtypen vornehmen zu
US5513829A offenbart eine Hebevorrichtung nach dem Oberbegriff des Anspruchs 1.

Der Erfindung liegt die Aufgabe zugrunde, eine Hebevorrichtung der eingangs genannten Art, insbesondere einen Motorenheber und/oder einen Getriebeheber zum Aus- und Einbau von Motoren und/oder Getrieben bereitzustellen, die zur Demontage unterschiedlichster Baugruppen, zumindest unterschiedlicher Motoren und/oder Getriebe unterschiedlicher Fahrzeugtypen verwendet werden können, wobei eine Anpassung an die Baugruppen in einfacher Weise durchführbar ist.

Die Erfindung löst die Aufgabe durch eine Hebevorrichtung mit den Merkmalen des Anspruchs 1. Vorteilhafte Weiterbildungen der Erfindung sind in den abhängigen Ansprüchen angegeben.

Kennzeichnend für die erfindungsgemäße Hebevorrichtung, die insbesondere als Getriebeheber und/oder Motorheber einsetzbar ist, ist, dass die Kopplungseinheit längsverschieblich an dem Tragarm gelagert ist und die Lastaufnahmeeinheit mit einer an einer Hubeinheit anordbaren Stützeinheit verstellbar verbunden ist.

Die erfindungsgemäße Hebevorrichtung gliedert sich in mehrere Baugruppen, wobei die Stützeinheit ergänzend zur Ausbildung der Lastaufnahmeeinheit zur Verbindung mit einer Kraneinheit vorhanden sein kann. Die Kraneinheit ermöglicht dabei, eine an der Hebevorrichtung angeordnete Kraftfahrzeugbaugruppe aus dem Kraftfahrzeug zu heben, wohingegen die Stützeinheit zur Verbindung der Hebevorrichtung mit einer herkömmlichen Hubeinheit, bspw. einem Hebebock, wie sie üblicherweise in Kraftfahrzeugwerkstätten vorhanden sind, dient und damit die Verwendung einer eigenen Hubeinheit für die Hebevorrichtung überflüssig macht. Anhebe- und Absenkbewegungen können über die Hubeinheit ausgeführt werden.

Die mindestens einen Tragarm aufweisende Lastaufnahmeeinheit ist dabei derart mit der Stützeinheit verbunden, dass sie gegenüber der Stützeinheit und damit gegenüber einer mit der Hebevorrichtung verbundenen Hubeinheit verstellt werden kann. Die Verstellbarkeit ermöglicht es dabei, die einen oder weitere Tragarme aufweisende Lastaufnahmeeinheit, in unterschiedlichen Positionen gegenüber der Stützeinheit bzw. einer mit der Stützeinheit verbundenen Hubeinheit zu verstellen, so dass die Lastaufnahmeeinheit zur Abstützung und Demontage einer Vielzahl unterschiedlicher Kraftfahrzeugbaugruppen verwendbar ist.

Zur Verbindung der Lastaufnahmeeinheit mit der Kraftfahrzeugbaugruppe, bspw. einem Kraftfahrzeuggetriebe oder Fahrzeugmotor, dient sowohl im Falle der Verwendung der Hebevorrichtung mit einer Hubeinheit als auch mit einer Kraneinheit eine an dem Tragarm längsverschieblich gelagerte Kopplungseinheit, an der die Kraftfahrzeugbaugruppe abgestützt ist oder hängt.

Die Einstellbarkeit des Tragarms gegenüber der Stützeinheit bietet gemeinsam mit der Verlagerbarkeit der Kopplungseinheit, welche bspw. zur Aufnahme von mit dem Getriebe verbindbaren Bolzen oder mit einer Motoreinheit verbindbaren Augenschrauben ausgebildet ist, die Möglichkeit, die Hebevorrichtung optimal an die zu demontierende Kraftfahrzeugbaugruppe anzupassen. Die Laufaufnahmeeinheit lässt sich durch die erfindungsgemäße Ausgestaltung der Hebevorrichtung in eine beliebige Position gegenüber der Hubeinheit bzw. Stützeinheit und/oder Kraneinheit verstellen, so dass unterschiedliche Kraftfahrzeugbaugruppen, bspw. Getriebe unterschiedlicher Baureihen und Kraftfahrzeugtypen mit der erfindungsgemäßen Hebevorrichtung abgestützt und dann demontiert werden können. Die Verwendung der erfindungsgemäßen Hebevorrichtung erlaubt es dabei auf weitere, baugruppenspezifische Hebevorrichtungen zu verzichten, so dass mit der erfindungsgemäßen Hebevorrichtung ausgestattete Kraftfahrzeugwerkstätten auf weitere, einen erheblichen Lagerraum beanspruchende sowie kostenintensive Hebevorrichtungen zur Demontage weiterer Baugruppen verzichtet werden kann. Ferner ermöglicht die Nutzung der erfindungsgemäßen Hebevorrichtung den Ausbau und Einbau einer Kraftfahrzeugbaugruppe, insbesondere eines Getriebes durch nur eine Person.

Die Verstellbarkeit der Lastaufnahmeeinheit gegenüber der Stützeinheit und damit die Verstellbarkeit der Lastaufnahmeeinheit gegenüber einer mit der Stützeinheit verbundenen Hubeinheit kann grundsätzlich in beliebiger Weise ausgestaltet sein. Nach einer besonders vorteilhaften Ausgestaltung der Erfindung ist jedoch vorgesehen, dass die Lastaufnahmeeinheit gegenüber einer Längsachse der Stützeinheit kippbar mit der Stützeinheit verbunden und/oder der Tragarm um eine Längsachse der Lastaufnahmeeinheit schwenkbar ausgebildet ist.

Gemäß dieser Ausgestaltung der Erfindung besteht die Möglichkeit, die Lastaufnahmeeinheit gegenüber der Stützeinheit zu neigen. Die Neigung erfolgt dabei derart, dass eine durch einen oder mehrere Tragarme aufgespannte Ebene der Lastaufnahmeeinheit gegenüber einer Längsachse der Stützeinheit, welche üblicherweise im montieren Zustand der Hebevorrichtung an der Hubeinheit auch der Längsachse der Hubeinheit entspricht, geneigt werden kann. Hierdurch ist es möglich, den oder die Tragarme mit ihren Kopplungseinheiten in besonders vorteilhafter Weise sowohl an die Einbaulage der zu demontierenden Kraftfahrzeugbaugruppe, bspw. des Getriebes, als auch an die Ausrichtung der verwendeten Hubeinheit anzupassen, so dass eine besonders zuverlässige Anpassung und Abstützung der Kraftfahrzeugbaugruppe erfolgen kann.

Weiter sieht diese Weiterbildung der Erfindung alternativ oder zusätzlich vor, dass der Tragarm um eine Längsachse der Lastaufnahmeeinheit schwenkbar ausgebildet ist. Die Schwenkbarkeit des Tragarms oder weiterer Tragarme um die Längsachse der Lastaufnahmeeinheit, welche in der Regel deckungsgleich mit der Längsachse der Stützeinheit ist oder mit dem Lastaufnahmepunkt einer Kraneinheit fluchtet, gewährleistet neben einer hohen Variabilität der Hebevorrichtung zudem, dass die auf die Lastaufnahmeeinheit wirkenden Kräfte zuverlässig von der Kraneinheit aufgenommenen oder auf die Stützeinheit und damit auf die mit der Stützeinheit verbindbare Hubeinheit übertragen werden können. Durch die Schwenkbarkeit des oder der Tragarme um die Längsachse der Lastaufnahmeeinheit kann die an den oder dem Tragarm angeordnete Kopplungseinheit an einem beliebigen Punkt auf einer durch die Verschwenkbarkeit und Länge der Tragarme definierte Fläche angeordnet werden. Die zusätzliche Kippbarkeit dieser Fläche erlaubt eine optimale Anpassung an eine Vielzahl von Kraftfahrzeugbaugruppen und deren Einbausituation am Kraftfahrzeug.

Die Ausgestaltung der vorzugsweise vorgesehenen Kippbarkeit der Lastaufnahmeeinheit gegenüber der Längsachse der Stützeinheit kann grundsätzlich in beliebiger Weise ausgestaltet werden. Nach der Erfindung ist jedoch vorgesehen, dass die Stützeinheit über eine Radialgelenk-Lagereinheit mit der Lastaufnahmeeinheit verbunden ist, wobei bevorzugt die Radialgelenk-Lagereinheit ein Radialgelenklager mit einem mit der Stützeinheit verbundenen Innenring und einen mit der Lastaufnahmeeinheit verbundenen Außenring aufweist.

Die Verwendung einer Radialgelenk-Lagereinheit stellt eine besonders einfache und zuverlässige Möglichkeit dar, die Lastaufnahmeeinheit gegenüber der Stützeinheit kippbar auszugestalten. In einer besonders einfachen Ausgestaltung der Erfindung ist dabei nach einer Weiterbildung vorgesehen, dass ein Radialgelenklager mit einem mit der Stützeinheit verbundenen Innenring und einem mit der Lastaufnahmeeinheit verbundenen Außenring die Radialgelenk-Lagereinheit bildet. Die Ausgestaltung der Radialgelenk-Lagereinheit gemäß dieser Weiterbildung der Erfindung ermöglicht die Herstellung einer besonders kompakten, kippbaren Verbindung von Stützeinheit und Lastaufnahmeeinheit. Darüber hinaus gewährleistet die Radialgelenk-Lagereinheit eine zuverlässige Übertragung sämtlicher auf die Lastaufnahmeeinheit wirkenden Kräfte auf die Stützeinheit sowie auf eine mit der Stützeinheit verbindbare Hubeinheit.

Die Ausgestaltung der Neigungsverstellung sowie eine Arretierung der eingestellten Neigung ist grundsätzlich frei wählbar. Nach einer besonders vorteilhaften Ausgestaltung der Erfindung ist jedoch vorgesehen, dass ein, bevorzugt zwei um 90° versetzt zueinander um die Längsachse der Stützeinheit angeordnete, längenveränderbare Neigungsversteller einenends mit der Lastaufnahmeeinheit und anderenends mit der Stützeinheit verbunden sind.

Die Verwendung derartiger Neigungsversteller zeichnet sich dabei dadurch aus, dass über die Einstellbarkeit der Länge der Neigungsversteller der Neigungswinkel der Lastaufnahmeeinheit gegenüber der Stützeinheit besonders einfach und komfortabel eingestellt werden kann. Eine Einstellung der Länge der Neigungsversteller bewirkt aufgrund der Verbindung des Neigungsverstellers mit der Lastaufnahmeeinheit und der Stützeinheit die Einstellung eines Winkels der Lastaufnahmeeinheit und damit einer durch einen oder mehrere Tragarme aufgespannten Ebene gegenüber der Stützeinheit.

Die Verwendung eines zweiten, um 90° versetzt zu dem ersten Neigungsversteller angeordneten zweiten Neigungsversteller ermöglicht die Einstellung eines zweiten, um 90° versetzten Winkels der Lastaufnahmeeinheit, bzw. der aufgespannten Ebene, so dass über die beiden um 90° versetzt zueinander angeordneten Neigungsversteller eine durch einen oder mehrere Tragarme aufgespannte Ebene in Abhängigkeit von der Längenverstellbarkeit der Neigungsversteller in eine beliebige Richtung um die Längsachse der Stützeinheit nach Art einer Taumelbewegung geneigt werden kann.

Die Längenveränderbarkeit der Neigungsversteller ist dabei unterschiedlich ausgestaltbar. Eine mögliche Ausgestaltung besteht in der Verwendung eines zwei gleichgerichtete Innengewinde aufweisenden Handgriffs, wobei die Innengewinde jeweils ein Verbindungsmittel aufnehmen, das mit der Lastaufnahmeeinheit bzw. Stützeinheit verbunden ist, so dass eine Verdrehung des Handgriffs eine Veränderung der Abstände der Verbindungsmittel bewirkt. Bei einer selbsthemmenden Ausgestaltung des Innengewindes kann auf separate Arretierungsmittel verzichtet werden.

Die Ausgestaltung der Lastaufnahmeeinheit derart, dass diese gegenüber der Stützeinheit verstellbar ist, kann grundsätzlich in beliebiger Weise erfolgen, wobei zur Neigungseinstellung der Lastaufnahmeeinheit gegenüber einer Längsachse der Stützeinheit erfindungsgemäß eine Radialgelenk-Lagereinheit vorgesehen ist. Nach einer besonders vorteilhaften Ausgestaltung der Erfindung ist ferner vorgesehen, dass die Lastaufnahmeeinheit eine mit der Radialgelenk-Lagereinheit verbundene Führungseinheit aufweist, die zur verschwenkbaren Lagerung des Tragarms um die Längsachse der Führungseinheit ausgebildet ist.

Gemäß dieser Ausgestaltung der Erfindung weist die Lastaufnahmeeinheit eine Führungseinheit auf, an der ein oder mehrere Tragarme um die Längsachse der Führungseinheit schwenkbar angeordnet sind. Die Verschwenkbarkeit des oder der Tragarme gewährleistet dabei eine einfache und optimale Anpassung der Hebevorrichtung an die aufzunehmende Kraftfahrzeugbaugruppe, insbesondere an ein zu demontierendes Kraftfahrzeuggetriebe. Zur Verbindung mit den Kraftfahrzeugbaugruppen können dabei an den Tragarmen eine oder mehrere Kopplungseinheiten angeordnet sein, die wiederum zur Aufnahme spezifischer Verbindungsmittel, bspw. geeigneter Bolzen oder Augenschrauben ausgebildet sind, die an die Abstütz- bzw. Anhebepunkte, bspw. Bolzenaufnahmen der aufzunehmenden Kraftfahrzeugbaugruppe angepasst sind. Die Ausgestaltung der Lastaufnahmeeinheit mit einer Führungseinheit und gegenüber der Führungseinheit verschwenkbaren Tragarmen erlaubt zudem eine besonders kompakte Herstellung der Hebevorrichtung.

Zur verschwenkbaren Lagerung der Tragarme ist dabei nach einer Weiterbildung der Erfindung vorgesehen, dass die Führungseinheit eine Kulisse zur verstellbaren Lagerung eines mit dem Tragarm verbundenen Lagerkörpers aufweist. Die Verwendung einer Kulisse sowie eines an die Kulisse angepassten Lagerkörpers gewährleistet eine besonders zuverlässige Verbindung des Tragarmes mit der Führungseinheit und damit eine besonders zuverlässige Abstützung der Tragarme an der Führungseinheit und somit eine gute Übertragung der auf die Tragarme wirkenden Kräfte auf die mit der Führungseinheit verbundene Stütz- oder Kraneinheit. Darüber hinaus kann durch diese Ausgestaltung der Erfindung gewährleistet werden, dass eine eingestellte Position des oder der Tragarme beibehalten wird, so dass eine einfache Demontagemöglichkeit der Kraftfahrzeugbaugruppe besteht.

Die Ausgestaltung der Lagerkörpers, der den Tragarm mit der Führungseinheit verbindet und welcher bevorzugt starr mit dem Tragarm verbunden ist, ist dabei grundsätzlich frei wählbar. Nach einer besonders vorteilhaften Ausgestaltung der Erfindung ist jedoch vorgesehen, dass sich der Lagerkörper in Längsachsenrichtung der Führungseinheit erstreckt und einenends über einen Kugelkörper an einer koaxial zu einem Führungsbolzen der Führungseinheit verlaufenden ringförmigen Führungsbahn und anderenends über einen an dem Lagerkörper angeordneten Lagerring verschwenkbar an der Führungseinheit gelagert ist, wobei der Lagerring verschwenkbar an dem Führungsbolzen angeordnet ist.

Gemäß dieser Ausgestaltung der Erfindung erstreckt sich die Längsachse des Lagerkörpers parallel zur Längsachse der Führungseinheit. Der Tragarm verläuft demnach senkrecht zur Längsachse der Führungseinheit und des Lagerkörpers. Mit einem - bezogen auf die Gebrauchslage - am unteren Ende des Lagerkörpers angeordneten Kugelkörper stützt sich der Lagerkörper an der ringförmigen Führungsbahn der Führungseinheit ab. Die Verbindung des Lagerkörpers über einen Kugelkörper in der Führungsbahn gewährleistet eine besonders einfache sowie zuverlässige Einstellbarkeit des Tragarms gegenüber der Führungseinheit. Zur Sicherung der Position des Lagerkörpers gegenüber der Führungseinheit weist der Lagerkörper darüber hinaus im Bereich seines dem Kugelkörper gegenüberliegenden - bezogen auf die Gebrauchslage - oberen Endes einen sich senkrecht in Richtung auf den Führungsbolzen erstreckenden Lagerring auf, welcher in der Gebrauchslage den Führungsbolzen koaxial umgibt, so dass der Lagerkörper insgesamt um die Längsachse der Führungseinheit, bzw. den Führungsbolzen verschwenkbar, jedoch nicht gegenüber diesem verkippt werden kann, so dass eine besonders gute Kraftübertragung bei gleichzeitig hoher Positionssicherheit des Tragarms gewährleistet ist.

Die Anzahl der Tragarme der Lastaufnahmeeinheit ist grundsätzlich frei wählbar und kann entsprechend des vorgesehenen Einsatzbereichs festgelegt werden. Nach einer besonders vorteilhaften Ausgestaltung der Erfindung ist jedoch vorgesehen, dass zwei, bevorzugt drei besonders bevorzugt vier Tragarme um eine Längsachse des Führungsbolzens verschwenkbar an der Führungseinheit gelagert sind. Die Anordnung erfolgt demnach derart, dass die Führungsbolzen auf einer gemeinsamen koaxialen Kreisbahn um den Führungsbolzen verteilt angeordnet sind, so dass diese um den Führungsbolzen herum verschwenkt werden können. Die Lagerringe der einzelnen Tragarme sind dabei jeweils derart in unterschiedliche Nuten eines Rastabschnitts des Lagerkörpers angeordnet, so dass die Lagerringe - in Längsachsenrichtung des Führungsbolzens betrachtet - übereinanderliegend an einem Führungsabschnitt des Führungsbolzens gelagert sind.

Gemäß dieser Ausgestaltung der Erfindung ist vorgesehen, dass die einzelnen Lagerringe der einzelnen Tragarme jeweils in unterschiedlichen Ebenen senkrecht zur Längsachse des Führungsbolzens verlaufen, so dass die Führungseinheit besonders kompakt ausgeführt werden kann. Jeder Tragarm ist demnach einenends über einen Kugelkörper und anderenends über einen Lagerring an der Führungseinheit geführt, wobei die einzelnen Lagerringe der jeweiligen Tragarme in Längsachsenrichtung betrachtet im Abstand voneinander an dem Führungsabschnitt angeordnet sind. Besonders vorteilhafter Weise kann dabei zwischen den einzelnen Lagerringen ein Zwischenring angeordnet sein, um so eine gute Verstellbarkeit zu gewährleisten.

Nach einer weiteren Ausgestaltung der Erfindung ist ferner vorgesehen, dass der Tragarm einen zwischen einer Freigabestellung und einer Arretierungsstellung verstellbaren Bremskörper aufweist. Die Verwendung eines derart verstellbaren Bremskörpers ermöglicht es zum einen, den Tragarm in der Freigabestellung des Bremskörpers in einfacher Weise gegenüber dem Führungsbolzen zu verstellen. Nach Einstellung der gewünschten Position kann dann der Tragarm zum anderen zuverlässig über den Bremskörper in der Arretierungsstellung festgelegt werden, so dass nach Einstellung der Position der Tragarme der Lastaufnahmeeinheit in Abhängigkeit von der zu demontierenden Kraftfahrzeugbaugruppe die Hebevorrichtung zuverlässig in einer entsprechend angepassten Position verbleibt.

Die Wirkungsweise des Bremskörpers in der Arretierungsstellung ist dabei grundsätzlich frei wählbar. So kann dieser bspw. derart ausgestaltet sein, dass er in der Arretierungsstellung eine formschlüssige Verbindung mit dem Führungsbolzen oder anderen Bauteilen der Führungseinheit herstellt. Nach einer besonders vorteilhaften Ausgestaltung der Erfindung ist jedoch vorgesehen, dass der Bremskörper mittels eines Arretierungsbügels in Richtung auf den Führungsbolzen verstellbar ist und in der Arretierungsstellung den Tragarm kraftschlüssig an dem Führungsbolzen arretiert.

Gemäß dieser Weiterbildung der Erfindung erfolgt somit eine Verstellung des Bremskörpers über einen Arretierungsbügel, der zwischen einer der Freigabestellung und der Arretierungsstellung des Bremskörpers entsprechenden Position verstellbar ist. In der Arretierungsstellung bewirkt der Arretierungsbügel einen Kraftschluss des Bremskörpers mit einer Oberfläche des Führungsbolzens, so dass dieser dann zuverlässig in der eingestellten Position verbleibt. Die Verwendung einer kraftschlüssigen Verbindung zeichnet sich dabei dadurch aus, dass diese eine Festlegung des Tragarms in einer beliebigen Winkelposition, unabhängig von Rastmarken ermöglicht. Gleichzeitig ermöglicht die Verwendung des Arretierungsbügels einen schnellen und einfachen Wechsel zwischen der Freigabestellung und der Arretierungsstellung, so dass eine komfortable, einfache und schnelle Anpassbarkeit der Hebevorrichtung an eine zu demontierende Kraftfahrzeugbaugruppe erfolgen kann.

Die Einstellung der Hebevorrichtung, d. h. die Ausrichtung des Tragarmes oder der Tragarme an der Führungseinheit sowie im Fall der Verwendung mit einer Hubeinheit eine ggf. vorgesehene Neigung der Aufnahmeeinheit gegenüber der Stützvorrichtung hat grundsätzlich unter Berücksichtigung der zu demontierenden Kraftfahrzeugbaugruppe zu erfolgen, wobei an dieser üblicherweise Lagerpunkte vorgesehen sind, an denen eine Abstützung bzw. Anhebung der zu demontierenden Kraftfahrzeugbaugruppe erfolgen kann. Die Einstellung der Tragarme kann bspw. über eine rein optische Ausrichtung durch den Benutzer erfolgen, wobei diese dann unmittelbar an der zu demontierenden Kraftfahrzeugbaugruppe, üblicherweise in einem beengten Arbeitsumfeld erfolgen muss. Nach einer besonders vorteilhaften Ausgestaltung der Erfindung ist jedoch vorgesehen, dass an der Führungseinheit eine Winkelskala und an dem Tragarm ein an der Winkelskala ausrichtbares Zeigerelement angeordnet ist.

Gemäß dieser Ausgestaltung der Erfindung lässt sich der Tragarm über ein Zeigerelement und die an der Führungseinheit angeordnete Winkelskala in einfacher Weise in einer vorbestimmten Position festlegen. Somit ist es möglich, bei Vorliegen kraftfahrzeugbaugruppenspezifischer Daten, eine Ausrichtung der Tragarme unabhängig vom Fahrzeug vornehmen zu können, so dass dann die Hebevorrichtung in der eingestellten Position unmittelbar, ohne weitere Anpassungen, an der zu demontierenden Kraftfahrzeugbaugruppe angeordnet und mit dieser verbunden werden kann. Idealerweise liegen für jede Kraftfahrzeugbaugruppe spezifische Daten vor, die vorab eine entsprechende Einstellbarkeit der Tragarme über das Zeigerelement und die Winkelskala erlauben.

Besonders bevorzugt ist ferner vorgesehen, dass der Tragarm eine Längenskala und die Kopplungseinheit ein Zeigerelement zur Ausrichtung der Kopplungseinheit an dem Tragarm aufweist. Analog zur Ausrichtung des Tragarms an der Winkelskala erlaubt die Verwendung einer Längenskala sowie eines an der Kopplungseinheit angeordneten Zeigerelements die Längsausrichtung der Kopplungseinheit an dem Tragarm, so dass bei Vorliegen entsprechender Daten, sowohl die Tragarme als auch die Kopplungseinheiten unabhängig von umständlichen Versuchen an dem zu demontierenden Kraftfahrzeugbauteil eingestellt werden können. Idealerweise liegen für alle Kraftfahrzeugbaugruppen Winkeldaten für die Tragarme und Längendaten für die Kopplungseinheiten vor, so dass es einem Nutzer die besonders komfortable Möglichkeit bietet, die Hebevorrichtung bereits im Vorfeld an jede zu demontierende Baugruppe anzupassen und dann ohne Nachjustierung zu benutzen.

Nach einer besonders vorteilhaften Ausgestaltung der Erfindung weisen dabei bspw. bei dem Einsatz mehrerer Tragarme diese eine voneinander unterschiedliche Kennzeichnung, insbesondere eine voneinander abweichende Farbgebung auf. Eine abweichende Farbgebung, welche alternativ oder zusätzlich zu einer bspw. vorzunehmenden Nummerierung oder sonstigen unterschiedlichen Kennzeichnungen der Tragarme, bspw. mittels Buchstaben verwendet werden kann, erlaubt bei der Verwendung der Daten der Kraftfahrzeugbaugruppen in aufbereiteter Form eine besonders komfortable Anpassung der Lastaufnahmeeinheit. So können bspw. bei der Verwendung einer voneinander abweichenden Farbgebung für die Tragarme auf den Daten der Kraftfahrzeugbaugruppen basierende farbige Tabellen bereit gestellt werden, welche eine den jeweiligen Farben zugeordnete Winkelposition sowie eine Längsposition der Kopplungseinheiten der jeweiligen Tragarme aufzeigen. Diese Ausgestaltung der Erfindung zeichnet sich insbesondere im Werkstattbetrieb aus, da sie besonders anwendungsfreundlich ist und Fehleinstellungen in besonders einfacher Weise vorbeugt. Bei der Verwendung von bspw. vier Tragarmen weist jeder von diesen eine unterschiedliche Farbe auf. Eine kraftfahrzeugbaugruppenspezifische Datenkarte weist für jede Farbe eine Winkelposition und eine Längsposition auf, so dass die Lastaufnahmeeinheit schnell und effektiv an die jeweilige Kraftfahrzeugbaugruppe anpassbar ist.

Die Kopplungseinheit, welche zur Verbindung mit der Kraftfahrzeugbaugruppe dient, weist nach einer vorteilhaften Weiterbildung der Erfindung eine seitlich von dem Tragarm angeordnete Aufnahmeöffnung zur Aufnahme eines Kopplungsadapters auf, wobei der Kopplungsadapter in der Aufnahmeöffnung einspannbar oder in die Aufnahmeöffnung einschraubbar ist. Die Aufnahmeöffnung erlaubt es, an die jeweilige Kraftfahrzeugbaugruppe angepasste Adapter aufzunehmen, welche eine optimale Abstützung oder hängende Aufnahme der jeweiligen Kraftfahrzeugbaugruppe ermöglichen. Die Kopplungsadapter, bspw. Stufenbolzen oder Augenschrauben, sind dabei in der Aufnahmeöffnung einspannbar bzw. in diese einschraubbar, so dass eine gute Lagesicherung der Kopplungsadapter gewährleistet ist. Darüber hinaus ermöglicht die seitliche Anordnung der Aufnahmeöffnung an der Kopplungseinheit eine besonders flache Bauweise und zudem im Falle der nach einer vorteilhaften Weiterbildung der Erfindung vorgesehenen Ausgestaltung der Kopplungseinheit derart, dass diese sowohl mit einer einerseits als auch mit einer andererseits des Tragarms angeordneten Aufnahmeöffnung längsverschieblich an dem Tragarm gelagert ist, eine hohe Variabilität der Hebevorrichtung.

Unter der einerseits als auch andererseits erfolgenden Anordnung der Kopplungseinheit wird dabei die Möglichkeit verstanden, die Kopplungseinheit wenden zu können, d. h. von dem Tragarm abziehen und so verwenden zu können, dass in Abhängigkeit von der Aufschieberichtung die Aufnahmeöffnung sowohl links als auch rechtsseitig - bezogen auf die Gebrauchslage - des Tragarms angeordnet sein kann. Hierdurch erhöht sich die Variabilität der Hebevorrichtung in ergänzender Weise, nachdem der Schwenkbereich der Tragarme, insbesondere zweier benachbarter Tragarme auch davon abhängt, ob die Aufnahmeöffnungen der Kopplungseinheiten voneinander abgewandt oder einander zugewandt sind. Die Ausrichtung der Kopplungseinheiten kann dabei ebenfalls über geeignete Datentafeln vorgegeben werden, so dass dem Nutzer eine einfache Anpassbarkeit der Hebevorrichtung gegeben ist. Die Wendemöglichkeit der Kopplungseinheit bietet in Verbindung mit einer gegenüber dem Tragarm außermittigen Anordnung des Zeigerelements an der Kopplungseinheit ferner die Möglichkeit, an dem Tragarm eine doppelte Skalierung, d. h. zwei benachbart zueinander angeordnete Längenskalen anzuordnen.

Zur Festlegung der Kopplungseinheit in der eingestellten Position weist diese dabei nach einer besonders vorteilhaften Ausgestaltung der Erfindung ein Arretierungsmittel, insbesondere einen Arretierungsbügel auf, so dass einer Verschiebbarkeit und einer Störung besonders zuverlässig vorgebeugt wird. Der Arretierungsbügel verspannt dabei die Kopplungseinheit an dem Tragarm.

Ein Ausführungsbeispiel der Erfindung wird nachstehend mit Bezug auf die Zeichnungen erläutert. In den Zeichnungen zeigen:
- Fig. 1: eine perspektivische Ansicht einer Hebevorrichtung mit einer Lastaufnahmeeinheit mit vier Tragarmen;
- Fig. 2: eine Explosionsdarstellung der Hebevorrichtung von Fig. 1;
- Fig. 3: eine Ansicht eines Schnitts durch die Hebevorrichtung von Fig. 1;
- Fig. 4a: eine Schnittansicht eines Neigungsverstellers der Hebevorrichtung von Fig. 1;
- Fig. 4b: eine Explosionsdarstellung einer Stützvorrichtung mit daran angeordneter Radialgelenk-Lagereinheit in einer Explosionsdarstellung;
- Fig. 4c: eine perspektivische Darstellung der Stützeinheit mit daran angeordneter Radialgelenk-Lagereinheit;
- Fig. 5a: eine Explosionsdarstellung eines Tragarms mit daran angeordnetem Lagerkörper;
- Fig. 5b: eine perspektivische Ansicht des Tragarms von Fig. 5a mit daran angeordnetem Lagerkörper und
- Fig. 6: eine nicht erfindungsgemäße Ausführungsform der Hebevorrichtung.

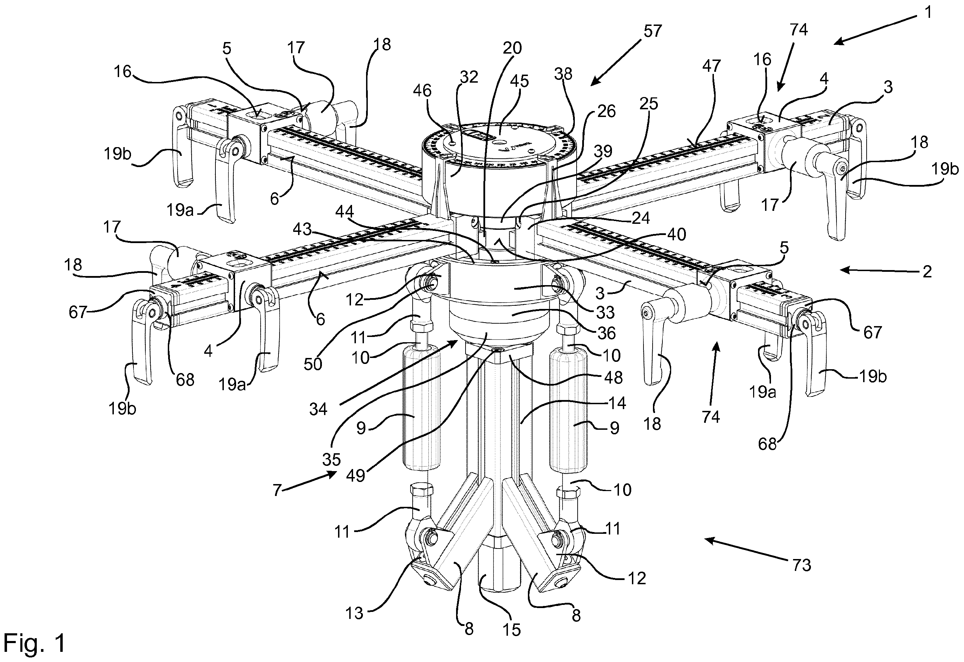

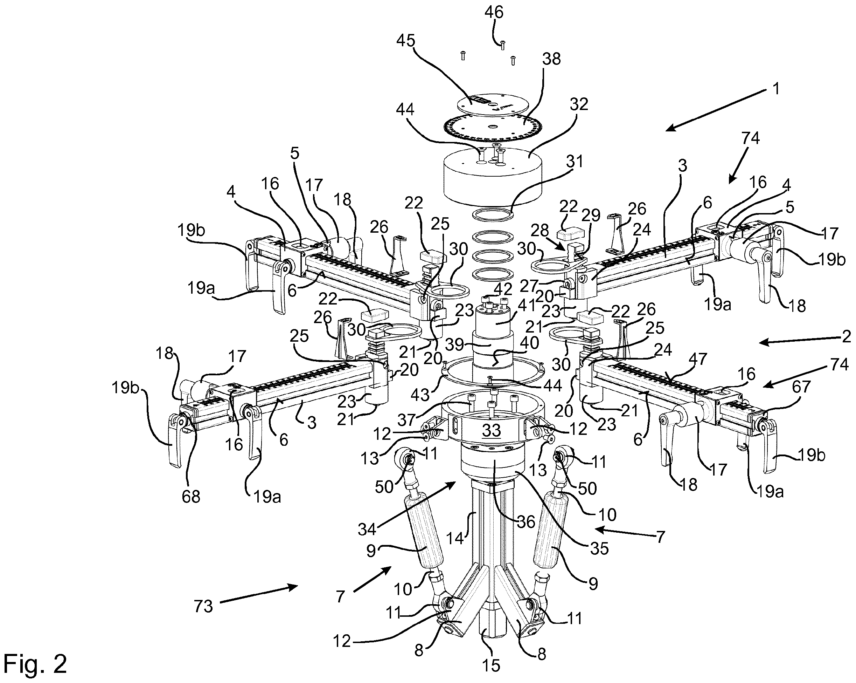

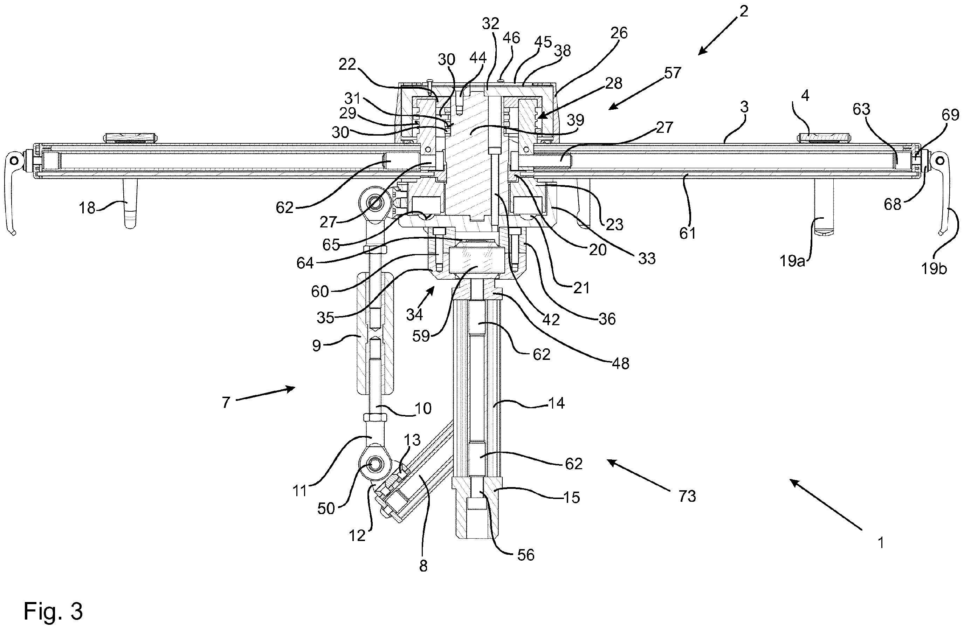

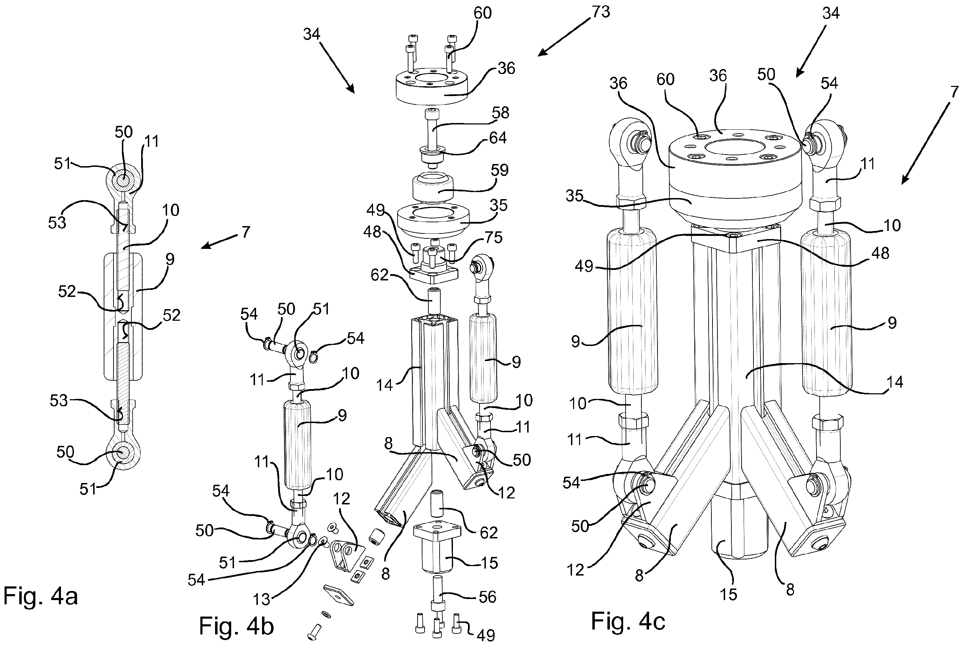

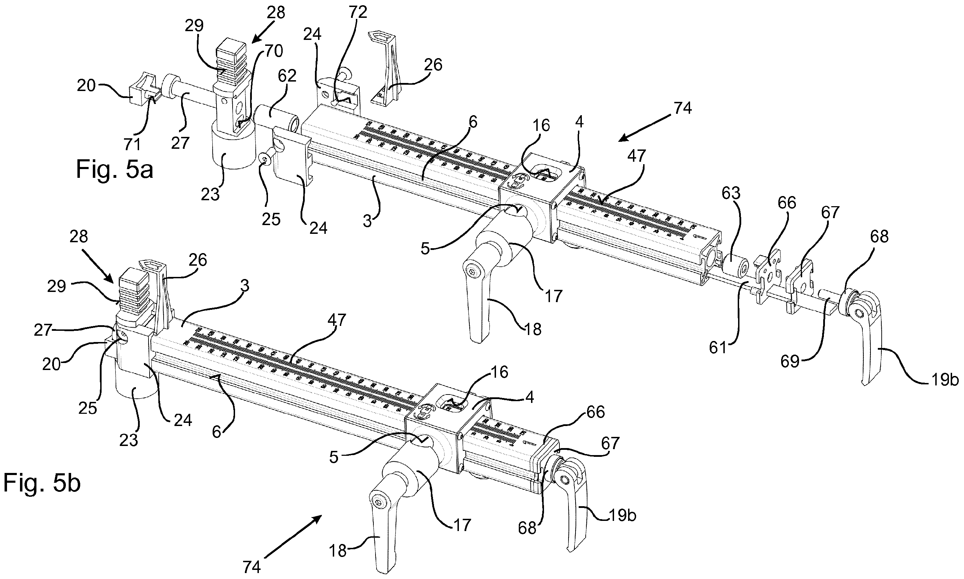

In Figur 1 ist eine Hebevorrichtung 1 dargestellt, welche in einer Kraftfahrzeugwerkstatt als Getriebeheber zur Demontage einer hier nicht dargestellten Getriebeeinheit eines Kraftfahrzeugs verwendbar ist. Zur Verbindung mit einer Getriebeeinheit weist die Hebevorrichtung 1 eine Lastaufnahmeeinheit 2 auf, welche in dem dargestellten Ausführungsbeispiel vier Tragarme 3 aufweist. Die Tragarme 3 sind an einer Führungseinheit 57 der Lastaufnahmeeinheit 2 um einen Führungsbolzen 39 der Führungseinheit 57 verschwenkbar angeordnet. Die Führungseinheit 57 ist ihrerseits über eine Radialgelenk-Lagereinheit 34 kippbar mit einer Stützeinheit 73 verbunden, mittels derer die Hebevorrichtung 1 mit einer hier nicht dargestellten Hubeinheit verbindbar ist (vgl. Fig. 2-5a).

Die verschwenkbare Anordnung der Tragarme 3 an der Führungseinheit 57 ermöglicht es, die Tragarme 3 zueinander in eine entsprechend der zu demontierenden Getriebeeinheit notwendigen Position zu verstellen. Zur verstellbaren Lagerung der Tragarme 3 an der Führungseinheit 57 sind die Tragarme 3 an ihren dem Führungsbolzen 39 zugewandten Enden mit einem in der Führungseinheit 57 verstellbar angeordneten Lagerkörper 23 verbunden. Die Verbindung der Lagerkörper 23 mit den Tragarmen 3 erfolgt dabei über eine Befestigungsschraube 27, die an dem dem Führungsbolzen 39 zugewandten Ende des Tragarms 3 in eine in dem Tragarm 3 eingesetzte Gewindehülse 62 einschraubbar ist. Eine weitere Lagesicherung des Lagerkörpers 23 an dem Tragarm 3 erfolgt über zwei seitlich an dem Tragarm 3 angeordnete Halteschalen 24, deren Befestigungsschraube 25 sich durch eine Durchgangsöffnung in dem Lagerkörper 23 erstreckt. Die Halteschalen 24 weisen darüber hinaus eine Ausnehmung 72 zur Aufnahme eines Zeigerelements 26 auf, welches zwischen den Halteschalen 24 ortsfest mit dem Tragarm 3 verbunden ist.

Der Lagerkörper 23 weist an seiner Unterseite - bezogen auf die Einbau- und Gebrauchslage - einen Kugelkörper 21 auf, welcher in einer koaxial zum Führungsbolzen 39 verlaufenden Führungsbahn 65 in einem Gehäusegrundkörper 38 der Führungseinheit 57 gelagert ist. An seinem dem Kugelkörper 21 gegenüberliegendem Ende weist der Lagerkörper 23 einen mehrere Nuten 29 aufweisenden Rastabschnitt 28 auf. Die Nuten 29 dienen zur Aufnahme eines Lagerrings 30, wobei bei den vier verwendeten Tragarmen 3 die Lagerringe 30 jeweils - in Längsachsenrichtung des Lagerkörpers 23 betrachtet - in voneinander abweichenden, übereinanderliegenden Nuten 29 angeordnet sind. Die übereinanderliegende Anordnung der Lagerringe 30 erlaubt somit deren - in Längsachsenrichtung des Führungsbolzens 39 betrachtet - übereinanderliegende koaxiale Anordnung an einem Führungsabschnitt 41 des Führungsbolzens 39. Die in Längsachsenrichtung zwischen den Lagerringen 30 angeordneten Zwischenringe 31 gewährleisten dabei eine reibungsfreie Verstellung der Tragarme 3 an der Führungseinheit 57, wobei die Tragarme 3 zudem über einen an einer Unterseite der Tragarme 3 anliegenden Lagerring 43, der an einem umlaufenden Steg des Gehäusegrundkörpers 33 der Führungseinheit 57 befestigt ist, in jeder einstellbaren Position abgestützt sind. Die Tragarme 3 sind darüber hinaus noch über Lagerkappen 22, die an dem dem Kugelkörper 21 gegenüberliegenden Ende auf den Rastabschnitt 28 aufgesteckt sind, an einer Innenseite eines Gehäusedeckels 32 der Führungseinheit 57 geführt.

Der Gehäusedeckel 32, der durch seine beabstandete Anordnung zum Gehäusegrundkörper 33 eine schlitzförmige Kulisse für die Tragarme 3 bildet, ist über Befestigungsschrauben 44 mit dem Lagerbolzen 39 ortsfest verschraubt. Darüber hinaus weist der Gehäusedeckel 32 an seiner Oberseite eine Winkelskala 38 sowie ein Indikatorblech 45 auf, die gemeinsam über Haltestifte 46 an dem Gehäusedeckel 32 befestigt sind. Das Zeigerelement 26 liegt an der Winkelskala 38 an, so dass über das Zeigerelement 26 eine Einstellbarkeit der farblich unterschiedlichen Tragarme 3 in einer vorher festgelegten Position möglich ist.

Zur Arretierung der Tragarme 3 in der eingestellten Position weisen diese zudem einen Bremskörper 20 auf, welcher an dem Lagerkörper 23 des Tragarms 3 verschiebbar befestigt ist. Der Bremskörper 20 ist über ein an dem dem Lagerkörper 23 gegenüberliegenden Ende des Tragarms 3 angeordneten Arretierungsbügel 19b zwischen einer Freigabestellung und einer Arretierungsstellung verstellbar. In der Arretierungsstellung liegt der der Bremskörper 20 kraftschlüssig an einer Nut 40 des Führungsbolzens 39 an. Der Arretierungsbügel 19b ist hierzu zwischen einer der Arretierungsstellung und der Freigabestellung zugeordneten Position verstellbar. In der Arretierungsstellung übt ein an dem Arretierungsbügel 19b angeordneter Anlagering 68 über einen Druckkörper 67 Druck auf eine Druckstange 61 in Richtung auf den Führungsbolzen 39 aus, so dass der über einen Aufnahmeabschnitt 71 mit der Druckstange 61 verbundene Bremskörper 20 in entsprechender Weise an die Nut 40 gepresst wird.

Zur Lagerung des Arretierungsbügels 19b an dem Tragarm 3 ist in das dem Lagerkörper 23 gegenüberliegende Ende eine Zapfenaufnahme 63 zur Aufnahme eines Zapfens 69 des Arretierungsbügels in den Tragarm 3 eingesetzt und dort durch einen Verschlusskörper 66 gesichert. In Abhängigkeit von der Position des Arretierungsbügels 19b verschiebt dieser den Druckkörper 67, der mit der Druckstange 61 verbunden ist, in Richtung auf den Führungsbolzen 39 und bewirkt somit eine Arretierung der Tragarme 3 in einer eingestellten Position.

Neben dem Indikatorblech 45, welches bspw. ein Fahrzeug in einer Draufsicht zeigt und so in einfacher Weise eine Ausrichtung der eingestellten Hebevorrichtung 1 gegenüber dem Fahrzeug ermöglicht, so dass eine optimale Anpassung an die Lastaufnahmepunkte des zu demontierenden Getriebes besteht, weisen die Tragarme 3 zwei nebeneinander angeordnete Längenskalen 47 auf, welche die Ausrichtung einer längsverschieblich an den Tragarmen 3 gelagerten Kopplungseinheit 74 ermöglicht. Die Kopplungseinheiten 74 weisen hierbei eine an den Querschnitt der Tragarme 3 angepasste Hülse 4 mit einer außermittig gegenüber dem Tragarm 3 an der Kopplungseinheit 74 angeordneten Öffnung 16 auf, die in Abhängigkeit von ihrer Aufschieberichtung auf den Tragarm 3 eine exakte Ausrichtung der Hülse 4 an einer der beiden Längenskalen 47 ermöglicht, wobei hierzu die Öffnung 16 auch mit einem Zeiger versehen sein kann. Die Festlegung der in einer Nut 6 der Tragarme 3 geführten Hülsen 4 in einer eingestellten Position erfolgt über einen Arretierungsbügel 19a, der die Hülse 4 an dem Tragarm 3 festklemmt.

Zur Verbindung der Kopplungseinheit 74 mit einem zu demontierenden Getriebe weist die Kopplungseinheit 74 eine seitlich angeordnete Aufnahmeöffnung 5 auf, welche zur Aufnahme des hier nicht dargestellten Kopplungsadapters ausgelegt ist, wobei der Kopplungsadapter einenends an die Aufnahmeöffnung 5 und anderenends an die Auflagepunkte an dem Getriebe angepasst ist. Zur Festlegung des Kopplungsadapters in der Aufnahmeöffnung 5 dient ein Spannelement 17, welches über einen Spannhebel 18 in Richtung auf den Kopplungsadapter verschiebbar ist, so dass dieser ortsfest in der Aufnahmeöffnung 5 gesichert ist.

Der Führungsbolzen 39 ist über Befestigungsschrauben 42 ortsfest mit dem Gehäusegrundkörper 33 der Führungseinheit 57 verbunden, und der Gehäusegrundkörper 33 ist wiederum über Befestigungsschrauben 37 mit einer Radialgelenk-Lagereinheit 34 verbunden, die ihrerseits mit der Stützeinheit 73 verbunden ist. Zur Verbindung der Führungseinheit 57 mit der Radialgelenk-Lagereinheit 34 ist der Gehäusegrundkörper 33 der Führungseinheit 57 mit einer Oberschale 36 der Radialgelenk-Lagereinheit 34 über die Befestigungsschrauben 37 verschraubt. Die Oberschale 36 und die Unterschale 35 sind über Befestigungsschrauben 60 aneinander fixiert. In dem zwischen der Oberschale 36 und der Unterschale 35 gebildeten Gehäuse der Radialgelenk-Lagereinheit 34 ist ein Radialgelenklager 59 angeordnet. Ein Außenring des Radialgelenklagers 59 ist zwischen der Oberschale 36 und der Unterschale 35 fixiert. Ein Innenring des Radialgelenklagers 59 ist über eine Befestigungsschraube 58 an einem Lagerungsabschnitt 75 einer Lageraufnahme 48 der Stützeinheit 73 befestigt. Ein an der Lagersicherungsschraube 78 angeordneter Sicherungsring 64 sichert dabei die Position des Innenrings an dem Lageraufnahmeabschnitt 75 in axialer Richtung. Die Radialgelenk-Lagereinheit 34 sowie die mit der Radialgelenk-Lagereinheit 34 verbundene Lastaufnahmeeinheit 2 ist somit gegenüber einer Längsachse der Stützeinheit 73 neigbar.

Die Stützeinheit 73 weist dabei eine zentrale Tragstange 14 auf, an der die Lageraufnahme 48 mittels Befestigungsschrauben 49 sowie mittels der in eine Gewindehülse 62 eingeschraubten Lagersicherungsschraube 58 festgelegt ist. An dem der Lageraufnahme 48 gegenüberliegenden Ende weist die Stützeinheit 73 einen Kopplungskörper 15 auf. Dieser ist über eine Befestigungsschraube 56, die in eine in die Tragstange 14 eingesetzte Gewindehülse 62 eingeschraubt ist, sowie über in die Tragstange 14 eingeschraubte Befestigungsschrauben 49 an der Tragstange 14 befestigt. Über den Kopplungskörper 15 besteht die Möglichkeit, die Hebevorrichtung 1 an einer in Kraftfahrzeugwerkstätten üblicherweise vorhandenen Hebevorrichtung anzuordnen.

Zur Einstellung einer Neigung der Lastaufnahmeeinheit 2 über die Radialgelenk-Lagereinheit 34 weist die Stützeinheit 72 zwei um 90° versetzt angeordnete Neigungsversteller 7 auf. Die Neigungsversteller 7 sind einenends gelenkig an Haltern 12 befestigt, die an Auslegern 8 der Tragstange 14 angeordnet sind. Ein Bolzen 50 erstreckt sich hierzu durch eine Lagerbuchse 51 einer Bolzenaufnahme 11 des Neigungsverstellers 7. Der Neigungsversteller 7 ist an dem Halter 12 über an dem Bolzen 50 angreifende Sicherungsringe 54 in seiner Position gesichert. In analoger Weise sind die Neigungsversteller 7 an den an dem Gehäusegrundkörper 33 angeordneten Haltern 12 befestigt. Die Halter 12 sind an dem Ausleger 8 und dem Gehäusekörper 33 mittels Befestigungsschrauben 13 festgelegt.

In die gegenüberliegenden Bolzenaufnahmen 11 der Neigungsversteller 7 sind jeweils Gewindestangen 10 in ein Innengewinde 53 eingeschraubt. Mit ihren den Bolzenaufnahmen 11 gegenüberliegenden Enden sind die Gewindestangen 10 in ein Innengewinde 52 eines Handgriffs 9 eingeschraubt. Eine Verdrehung des Handgriffs 9 bewirkt somit eine Längenveränderung des Neigungsverstellers 7 und hierdurch ein Verkippen der Lastaufnahmeeinheit 2 gegenüber einer sich durch die Längsachse der Tragstange 14 erstreckenden Längsachse. Über die beiden um 90° versetzt zueinander um die Tragstange 14 angeordneten Neigungsversteller 7 lässt sich somit eine durch die Tragarme 3 der Lastaufnahmeeinheit 2 aufgespannte Ebene in eine beliebige Richtung gegenüber der Längsachse der Tragstange 14 neigen.

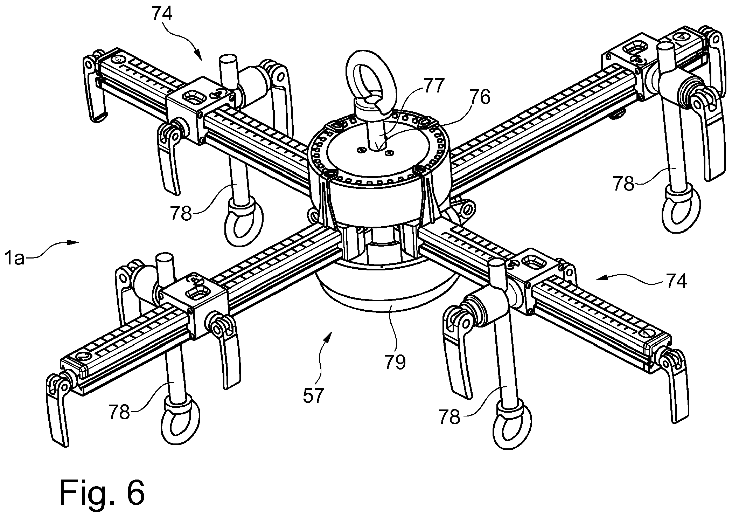

In Fig. 6 ist eine nicht erfindungsgemäße Ausführungsform der Hebevorrichtung 1a als Motorheber ohne Stützvorrichtung 73 und Radialgelenk-Lagereinheit 34 dargestellt, die sich von der in den Fig. 1 bis Fig. 5b dargestellten Hebevorrichtung 1 darüber hinaus allein dadurch unterscheidet, dass diese zur Bildung einer Kranhakenaufnahme in dem zentralen Führungsbolzen 39 der Führungseinheit 57 eine zentral angeordnete, in Längsachsenrichtung verlaufende Gewindebohrung 76 aufweist. Im Übrigen stimmt der Aufbau der Führungseinheit 57 mit der Führungseinheit 57 der Hebevorrichtung 1 überein. Die Gewindebohrung 76 dient zur Aufnahme einer sich durch Öffnungen in dem Gehäusedeckel 32, der Winkelskala 38 sowie Indikator 45 erstreckende Augenschraube 77, mittels der die Hebeeinrichtung 1a mit einer hier nicht dargestellten Kraneinheit gekoppelt werden kann.

Zur Verbindung der Hebevorrichtung 1a mit einer anzuhebenden Fahrzeugbaugruppe, insbesondere einem hier nicht dargestellten Kraftfahrzeugmotor sind in den Aufnahmeöffnungen 5 der Kopplungseinheiten 74 Kopplungsadapter bildende Augenschrauben 78 eingespannt, an die der Kraftfahrzeugmotor angehängt werden kann. Zum Schutz der Unterseite der mit der Radialgelenk-Lagereinheit 34 verbindbaren Führungseinheit 57 ist diese mit einer Schutzabdeckung 79 versehen.

**Bezugszeichenliste**

| | | | |
|---|---|---|---|
| 1 | Hebevorrichtung | 29 | Nut |
| 2 | Lastaufnahmeeinheit | 30 | Lagerring |
| 3 | Tragarm | 31 | Zwischenring |
| 4 | Hülse | 32 | Gehäusedeckel |
| 5 | Aufnahmeöffnung | 33 | Gehäusegrundkörper |
| 6 | Nut | 34 | Radialgelenk-Lagereinheit |
| 7 | Neigungsversteller | 35 | Unterschale |
| 8 | Ausleger | 36 | Oberschale |
| 9 | Handgriff | 37 | Befestigungsschraube |
| 10 | Gewindestange | 38 | Winkelskala |
| 11 | Bolzenaufnahme | 39 | Führungsbolzen |
| 12 | Halter | 40 | Nut |
| 13 | Befestigungsschraube | 41 | Führungsabschnitt |
| 14 | Tragstange | 42 | Befestigungsschraube |
| 15 | Kopplungskörper | 43 | Lagering |
| 16 | Zeigerelement/Öffnung | 44 | Befestigungsschraube |
| 17 | Spannelement | 45 | Indikator |
| 18 | Spannhebel | 46 | Haltestift |
| 19a | Arretierungsbügel | 47 | Längenskala |
| 19b | Arretierungsbügel | 48 | Lageraufnahme |
| 20 | Bremskörper | 49 | Befestigungsschrauben |
| 21 | Kugelkörper | 50 | Bolzen |
| 22 | Lagerkappe | 51 | Lagerbuchse |
| 23 | Lagerkörper | 52 | Innengewinde |
| 24 | Halteschale | 53 | Innengewinde |
| 25 | Befestigungsschraube | 54 | Sicherungsring |
| 26 | Zeigerelement | 55 | Befestigungsschraube |
| 27 | Befestigungsschraube | 56 | Befestigungsschraube |
| 28 | Rastabschnitt | 57 | Führungseinheit |
| 58 | Lagersicherungsschraube | 69 | Zapfen |
| 59 | Radial-Gelenklager | 70 | Öffnung (Druckstange) |
| 60 | Befestigungsschrauben | 71 | Aufnahmeabschnitt |
| 61 | Druckstange | 72 | Ausnehmung (Halteschale) |
| 62 | Gewindehülse | 73 | Stützeinheit |
| 63 | Zapfenaufnahme | 74 | Kopplungseinheit |
| 64 | Sicherungsring | 75 | Lageraufnahmeabschnitt |
| 65 | Führungsbahn | 76 | Kranhakenaufnahme |
| 66 | Verschlusskörper | 77 | Augenschraube |
| 67 | Druckkörper | 78 | Augenschraube |
| 68 | Anlagering | 79 | Schutzabdeckung |

## Patentansprüche

1. Hebevorrichtung für eine Baugruppe eines Kraftfahrzeugs, mit
- einer Lastaufnahmeeinheit (2) mit mindestens einem Tragarm (3) sowie
- einer an dem Tragarm (3) längsverschieblich gelagerten Kopplungseinheit (74) zur lösbaren Verbindung des Tragarms (3) mit der Baugruppe eines Kraftfahrzeugs,
**dadurch gekennzeichnet, dass**
die Lastaufnahmeeinheit (2) über eine Radialgelenk-Lagereinheit (34) mit einer an einer Hubeinheit anordbaren Stützeinheit (73) verstellbar verbunden ist.

2. Hebevorrichtung nach Anspruch 1, **dadurch gekennzeichnet, dass** die Lastaufnahmeeinheit (2) zur Verbindung mit einer Kraneinheit ausgebildet ist, insbesondere eine Kranhakenaufnahme (76) aufweist.

3. Hebevorrichtung nach Anspruch 1 oder 2, **dadurch gekennzeichnet, dass** die Lastaufnahmeeinheit (2) gegenüber einer Längsachse der Stützeinheit (73) kippbar mit der Stützeinheit (73) verbunden und/oder der Tragarm (3) um eine Längsachse der Lastaufnahmeeinheit (2) schwenkbar ausgebildet ist.

4. Hebevorrichtung nach einem der vorhergehenden Ansprüche, **dadurch gekennzeichnet, dass** ein, bevorzugt zwei um 90° versetzt zueinander um die Längsachse der Stützeinheit (73) angeordnete, längenveränderbare Neigungsversteller (7) einenends mit der Lastaufnahmeeinheit (2) und anderenends mit der Stützeinheit (73) verbunden sind.

5. Hebevorrichtung nach einem der vorhergehenden Ansprüche, **dadurch gekennzeichnet, dass** die Radialgelenk-Lagereinheit (34) ein Radialgelenk-Lager (59) mit einem mit der Stützeinheit (73) verbundenen Innenring und einem mit der Lastaufnahmeeinheit (2) verbundenen Außenring aufweist.

6. Hebevorrichtung nach einem der vorhergehenden Ansprüche, **dadurch gekennzeichnet, dass** die Lastaufnahmeeinheit (2) eine mit der Radialgelenklager-Einheit (34) verbundene Führungseinheit (57) aufweist, die zur verschwenkbaren Lagerung des Tragarms (3) um die Längsachse der Führungseinheit (57) ausgebildet ist.

7. Hebevorrichtung nach einem der vorhergehenden Ansprüche, **dadurch gekennzeichnet, dass** die Führungseinheit (57) eine Kulisse zur verstellbaren Lagerung eines mit dem Tragarm (3) verbundenen Lagerkörpers (23) aufweist.

8. Hebevorrichtung nach einem der vorhergehenden Ansprüche, **dadurch gekennzeichnet, dass** sich der Lagerkörper (23) in Längsachsenrichtung der Führungseinheit (57) erstreckt und einenends über einen Kugelkörper (21) an einer koaxial zu einem Führungsbolzen (39) der Führungseinheit (57) verlaufenden ringförmigen Führungsbahn (65) und anderenends über einen an dem Lagerkörper (23) angeordneten Lagerring (30) verschwenkbar an der Führungseinheit (57) gelagert ist, wobei der Lagerring (30) verschwenkbar an dem Führungsbolzen (39) angeordnet ist.

9. Hebevorrichtung nach einem der vorhergehenden Ansprüche, **dadurch gekennzeichnet, dass** zwei, bevorzugt drei, besonders bevorzugt vier Tragarme (3) um eine Längsachse des Führungsbolzens (39) verteilt, verschwenkbar an der Führungseinheit (57) gelagert sind, wobei die Lagerringe (30) der einzelnen Tragarme (3) jeweils derart in unterschiedlichen Nuten (29) eines Rastabschnitts (28) des Lagerkörpers (23) angeordnet sind, dass die Lagerringe (30) in Längsachsenrichtung des Führungsbolzens (39) benachbart zueinander an einem Führungsabschnitt (41) des Führungsbolzens (39) gelagert sind.

10. Hebevorrichtung nach einem der vorhergehenden Ansprüche, **dadurch gekennzeichnet, dass** der Tragarm (3) einen zwischen einer Freigabestellung und einer Arretierungsstellung verstellbaren Bremskörper (20) aufweist.

11. Hebevorrichtung nach einem der vorhergehenden Ansprüche, **dadurch gekennzeichnet, dass** der Bremskörper (20) mittels eines Arretierungsbügels (19b) in Richtung auf den Führungsbolzen (39) verstellbar ist und in der Arretierungsstellung den Tragarm (3) kraftschlüssig an dem Führungsbolzen (39) arretiert.

12. Hebevorrichtung nach einem der vorhergehenden Ansprüche, **gekennzeichnet durch** einen Indikator (45) zur Ausrichtung der Hebevorrichtung (1) gegenüber der Baugruppe des Kraftfahrzeugs, wobei der Indikator (45) insbesondere an der Führungseinheit (57) angeordnet ist.

13. Hebevorrichtung nach einem der vorhergehenden Ansprüche, **dadurch gekennzeichnet, dass** die Kopplungseinheit (74) eine seitlich von dem Tragarm (3) angeordnete Aufnahmeöffnung (5) zur Aufnahme eines Kopplungsadapters (78) aufweist, wobei der Kopplungsadapter (78) in der Aufnahmeöffnung (5) einspannbar oder in die Aufnahmeöffnung (5) einschraubbar ist.

14. Hebevorrichtung nach einem der vorhergehenden Ansprüche, **dadurch gekennzeichnet, dass** die Kopplungseinheit derart ausgebildet ist, dass diese sowohl mit einer einerseits als auch mit einer andererseits des Tragarms (3) angeordneten Aufnahmeöffnung (5) längsverschieblich an dem Tragarm (3) gelagert ist.

15. Hebevorrichtung nach einem der vorhergehenden Ansprüche, **dadurch gekennzeichnet, dass** die Kopplungseinheit (74) ein Arretierungsmittel (19a) zur Festlegung der Kopplungseinheit (74) an dem Tragarm (3) aufweist.

## Claims

1. A lifting device for a component of a motor vehicle, comprising:
- a load carrying unit (2) having at least one support arm (3), and
- a coupling unit (74) mounted on the support arm (3) in a longitudinally displaceable manner for releasably connecting the support arm (3) to the component of a motor vehicle,
**characterized in that**
the load carrying unit (2) is adjustably connected via a radial joint bearing unit (34) to a support unit (73) that can be arranged on a lifting unit.

2. The lifting device according to claim 1, **characterized in that** the load carrying unit (2) is designed to connect to a crane unit, in particular has a crane hook holder (76).

3. The lifting device according to claim 1 or 2, **characterized in that** the load carrying unit (2) is tiltably connected to the support unit (73) relative to a longitudinal axis of the support unit (73) and/or the support arm (3) is designed to be pivotable about a longitudinal axis of the load carrying unit (2).

4. The lifting device according to one of the preceding claims, **characterized in that** one, preferably two, length-changeable tilt adjusters (7), arranged offset 90° from each other about the longitudinal axis of the support unit (73), are connected to the load carrying unit (2) at one end, and to the support unit (73) at the other end.

5. The lifting device according to one of the preceding claims, **characterized in that** the radial joint bearing unit (34) has a radial joint bearing (59) with an inner ring connected to the support unit (73) and an outer ring connected to the load carrying unit (2).

6. The lifting device according to one of the preceding claims, **characterized in that** the load carrying unit (2) has a guide unit (57) connected to the radial joint bearing unit (34) which is designed to pivotably bear the support arm (3) about the longitudinal axis of the guide unit (57).

7. The lifting device according to one of the preceding claims, **characterized in that** the guide unit (57) has a link for adjustably bearing a bearing body (23) connected to the support arm (3).

8. The lifting device according to one of the preceding claims, **characterized in that** the bearing body (23) extends in the direction of the longitudinal axis of the guide unit (57), and one end is pivotably mounted on the guide unit (57) by means of a ball body (21) along an annular guide path (65) running coaxial to a guide bolt (39) of the guide unit (57), and the other end is pivotably mounted on the guide unit (57) by means of a bearing ring (30) arranged on the bearing body (23), wherein the bearing ring (30) is pivotably arranged on the guide bolt (39).

9. The lifting device according to one of the preceding claims, **characterized in that** two, preferably three, particularly preferably four, support arms (3) are pivotably mounted on the guide unit (57) and distributed along a longitudinal axis of the guide bolt (39), wherein the bearing rings (30) of the individual support arms (3) are arranged in different grooves (29) in a locking section (28) of the bearing body (23) such that the bearing rings (30), in the direction of the longitudinal axis of the guide bolt (39), are mounted next to each other in a guide section (41) of the guide bolt (39).

10. The lifting device according to one of the preceding claims, **characterized in that** the support arm (3) has a brake body (20) which is adjustable between a released position and a locked position.

11. The lifting device according to one of the preceding claims, **characterized in that** the brake body (20) is adjustable by means of a locking clip (19b) in the direction toward the guide bolt (39) and friction locks the support arm (3) onto the guide bolt (39) when in the locked position.

12. The lifting device according to one of the preceding claims, **characterized by** an indicator (45) for aligning the lifting device (1) relative to the component of the motor vehicle, wherein the indicator (45) is arranged in particular on the guide unit (57).

13. The lifting device according to one of the preceding claims, **characterized in that** the coupling unit (74) has a seat opening (5) arranged on the side of the support arm (3) for receiving a coupling adapter (78), wherein the coupling adapter (78) can be clamped in the seat opening (5) or can be screwed into the seat opening (5).

14. The lifting device according to one of the preceding claims, **characterized in that** the coupling unit is designed such that it is mounted on the support arm (3) in a longitudinally movable manner, both with a seat opening (5) arranged on one side of the support arm (3), and a seat opening (5) arranged on the other side of the support arm (3).

15. The lifting device according to one of the preceding claims, **characterized in that** the coupling unit (74) has a locking means (19a) for fixing the coupling unit (74) on the support arm (3).

## Revendications

1. Dispositif de levage pour un module d'un véhicule automobile comportant :
- une unité de port de charge (2) disposant d'au moins un bras de support (3) et
- une unité de couplage (74) montée sur le bras de support (3) de manière déplaçable au plan longitudinal afin de raccorder de façon amovible le bras de support (3) au module d'un véhicule automobile,
**caractérisé en ce que**
l'unité de port de charge (2) est raccordée de manière ajustable par le biais d'une unité de palier à joint radial (34) à une unité de support (73) qui peut être disposée sur une unité de levage.

2. Dispositif de levage selon la revendication 1, **caractérisé en ce que** l'unité de port de charge (2) est conçue pour se raccorder à une unité de grue et dispose en particulier d'un porteur de crochet de grue (76).

3. Dispositif de levage selon la revendication 1 ou 2, **caractérisé en ce que** l'unité de port de charge (2) est raccordée à l'unité de support (73) de façon inclinable par rapport à un axe longitudinal de l'unité de support (73) et/ou le bras de support (3) est conçu pour pouvoir pivoter autour d'un axe longitudinal de l'unité de port de charge (2).

4. Dispositif de levage selon l'une des revendications qui précèdent, **caractérisé en ce qu'**un ajusteur d'inclinaison à longueur réglable (7), et de préférence deux d'entre eux, disposés décalés de 90° l'un par rapport à l'autre autour de l'axe longitudinal de l'unité de support (73), sont raccordés à l'unité de port de charge (2) au niveau d'une extrémité et à l'unité de support (73) au niveau de l'autre extrémité.

5. Dispositif de levage selon l'une des revendications qui précèdent, **caractérisé en ce que** l'unité de palier à joint radial (34) dispose d'un palier à joint radial (59) avec une bague interne raccordée à l'unité de support (73) et une bague externe raccordée à l'unité de port de charge (2).

6. Dispositif de levage selon l'une des revendications qui précèdent, **caractérisé en ce que** l'unité de port de charge (2) dispose d'une unité de guidage (57) raccordée à l'unité de palier à joint radial (34) qui est conçue pour porter le bras de support (3) de manière pivotante autour de l'axe longitudinal de l'unité de guidage (57).

7. Dispositif de levage selon l'une des revendications qui précèdent, **caractérisé en ce que** l'unité de guidage (57) dispose d'un lien afin de porter de manière ajustable un corps de palier (23) raccordé au bras de support (3).

8. Dispositif de levage selon l'une des revendications qui précèdent, **caractérisé en ce que** le corps de palier (23) s'étend dans la direction de l'axe longitudinal de l'unité de guidage (57) et **en ce qu'**une extrémité est montée pivotante sur l'unité de guidage (57) au moyen d'un corps de bille (21) le long d'un parcours de guidage annulaire (65) se déroulant coaxial à un boulon de guidage (39) de l'unité de guidage (57) et **en ce que** l'autre extrémité est montée pivotante sur l'unité de guidage (57) au moyen d'une bague de palier (30) disposée sur le corps de palier (23), dans lequel la bague de palier (30) est disposée pivotante sur le boulon de guidage (39).

9. Dispositif de levage selon l'une des revendications qui précèdent, **caractérisé en ce que** deux bras de support (3), de préférence trois, et en particulier de préférence quatre, sont montés pivotants sur l'unité de guidage (57) et répartis le long d'un axe longitudinal du boulon de guidage (39), dans lequel les bagues de paliers (30) des bras de support (3) individuels sont disposés dans différentes rainures (29) dans une section de verrouillage (28) du corps de palier (23), de sorte que les bagues de palier (30), dans la direction de l'axe longitudinal du boulon de guidage (39), soient montées à proximité l'une de l'autre dans une section de guidage (41) du boulon de guidage (39).

10. Dispositif de levage selon l'une des revendications qui précèdent, **caractérisé en ce que** le bras de support (3) présente un corps de frein (20) qui est ajustable entre une position relâchée et une position verrouillée.

11. Dispositif de levage selon l'une des revendications qui précèdent, **caractérisé en ce que** le corps de frein (20) est ajustable au moyen d'une pince de verrouillage (19b) dans la direction allant vers le boulon de guidage (39) et verrouille par frottement le bras de support (3) sur le boulon de guidage (39) lorsqu'il est dans la position verrouillée.

12. Dispositif de levage selon l'une des revendications qui précèdent, **caractérisé par** un voyant (45) destiné à aligner le dispositif de levage (1) sur le module du véhicule automobile, dans lequel le voyant (45) est disposé en particulier sur l'unité de guidage (57).

13. Dispositif de levage selon l'une des revendications qui précèdent, **caractérisé en ce que** l'unité de couplage (74) a une ouverture de siège (5) disposée sur le côté du bras de support (3) afin de recevoir un adaptateur de couplage (78), dans lequel l'adaptateur de couplage (78) peut être serré dans l'ouverture de siège (5) ou peut être vissé dans l'ouverture de siège (5).

14. Dispositif de levage selon l'une des revendications qui précèdent, **caractérisé en ce que** l'unité de couplage est conçue de manière à être montée sur le bras de support (3) de manière mobile au plan longitudinal, à la fois avec une ouverture de siège (5) disposée sur un côté du bras de support (3) et une ouverture de siège (5) disposée de l'autre côté du bras de support (3).

15. Dispositif de levage selon l'une des revendications qui précèdent, **caractérisé en ce que** l'unité de couplage (74) dispose d'un moyen de verrouillage (19a) afin de fixer l'unité de couplage (74) sur le bras de support (3).
